# EUROPÄISCHE PATENTANMELDUNG

(11) **EP 3 045 049 A1**
(43) Veröffentlichungstag der Anmeldung: **20.07.2016**
(21) Anmeldenummer: 15151502.0
(22) Anmeldetag: 16.01.2015
(51) Int. Cl.: A23G 9/26, A23G 9/08

(54) **Verfahren zur Herstellung von Speiseeis**

(71) Anmelder: Marx-Freiherr von Müller, David, 10969 Berlin (DE)
(72) Erfinder: Marx-Freiherr von Müller, David, 10969 Berlin (DE)
(74) Vertreter: PATERIS Patentanwälte PartmbB

(57) **Zusammenfassung**

Es wird ein Verfahren zur Herstellung von Speiseeis zur Verfügung gestellt. In dem Verfahren wird eine Eisform mit einer Eismasse befüllt (S2) und die Eismasse in der Eisform zum Speiseeis gefroren (S3). Die Eisform wird vor dem Befüllen mit der Eismasse auf eine Temperatur von unter -150 °C abgekühlt (S1). Das Gefrieren der Eismasse durch Abgeben der in der Eismasse enthaltenen Wärme an die abgekühlte Eisform erfolgt.

## Beschreibung

Die vorliegende Erfindung betrifft ein Verfahren zur Herstellung von Speiseeis, welches insbesondere zur Herstellung von Eis am Stiel Verwendung finden kann.

Speiseeis, insbesondere Eis am Stiel, ist heutzutage eine beliebte Erfrischung aus einer gefrorenen Eismasse. In der industriellen Herstellung von Eis am Stiel werden Eisformen mit einer Eismasse befüllt und die befüllte Eisformen anschließend in eine Kühlwanne mit einer Temperatur von -30 °C bis -40 °C gegeben. Ein Beispiel für ein solches Verfahren ist in US 5,343,710 beschrieben.

Um der zum Eis gefrorenen Eismasse eine angenehme Konsistenz zu verschaffen, enthalten die Eismassen typischerweise Fett, Zucker und Luft. Die Notwendigkeit der Zugabe von Fett, Zucker und Luft schränkt jedoch die möglichen Rezepturen für Speiseeis und insbesondere von Eis am Stiel ein. So ist es überaus schwierig, kalorienarme Eissorten herzustellen. In US 2014/0072681 A1 ist ein System beschrieben, mit dem ein Kunde sich seine Eismasse aus einer Vielzahl an Flüssigkeiten selber mischen kann. Die vom Kunden zusammengemischte Eismasse wird dann von einem Mitarbeiter in ein Dewar, das beispielsweise mit flüssigem Stickstoff gefüllt ist, eingetaucht, um sie zu einem Eis am Stiel zu gefrieren. Auf diese Weise wird es möglich, Eis am Stiel mit individuellen Geschmackszusammensetzungen zu erzeugen. Für die industrielle Herstellung von Speiseeis, insbesondere durch Eis am Stiel, eignet sich dieses Verfahren jedoch nicht.

Ebenso ist es schwierig, alkoholhaltiges Eis am Stiel herzustellen, da die unterschiedliche Gefriertemperatur von Alkohol und Wasser beim Gefrieren zu Inhomogenitäten in der gefrorenen Eismasse führt. In US 2005/0142253 A1 ist daher vorgeschlagen worden, einer alkoholhaltigen Eismasse Stabilisatoren hinzuzufügen, um die Homogenität des fertigen Produktes, also der gefrorenen Eismasse, zu verbessern.

Gegenüber dem zitierten Stand der Technik ist es Aufgabe der vorliegenden Erfindung, ein vorteilhaftes Verfahren zum Herstellen von Speiseeis, insbesondere von Eis am Stiel, zur Verfügung zu stellen.

Die genannte Aufgabe wird durch ein Verfahren zum Herstellen von Speiseeeis nach Anspruch 1 gelöst. Die abhängigen Ansprüche enthalten vorteilhafte Ausgestaltungen der Erfindung.

Im erfindungsgemäßen Verfahren zur Herstellung von Speiseeis, insbesondere zur Herstellung von Eis am Stiel, wird eine Eisform mit einer Eismasse gefüllt und die Eismasse in der Eisform zum Speiseeis gefroren. Gemäß der Erfindung wird die Eisform vor dem Befüllen mit der Eismasse auf eine Temperatur von unter -150 °C, vorzugsweise auf eine Temperatur von unter -180 °C und insbesondere auf eine Temperatur von -196°C abgekühlt. Das Gefrieren der Eismasse erfolgt dann durch Abgeben der in der Eismasse enthaltenden Wärme an die abgekühlte Eisform. Das Abkühlen der Eisform kann dabei durch Eintauchen in ein Bad aus flüssigem Stickstoff erfolgen, wobei die Eisform insbesondere auf die Temperatur des flüssigen Stickstoffs, also auf -196 °C, abgekühlt werden kann. Grundsätzlich können auch andere lebensmitteltaugliche Kühlverfahren Verwendung finden, sofern sie ein Abkühlen der Eisform auf eine hinreichend tiefe Temperatur ermöglichen. Flüssiger Stickstoff ist jedoch insofern vorteilhaft, als dass dieser in einfacher Weise eine sehr rasche Abkühlung der Eisform auf eine hinreichend tiefe Temperatur ermöglicht.

Sowohl bei der Herstellung von klassischer Eiscreme als auch bei der Herstellung von Eis am Stiel gilt: je schneller der Gefrierprozess stattfindet, desto kleiner sind die dabei entstehenden Eiskristalle, was sich wiederum positiv auf die Gesamtqualität des Eises auswirkt und für eine angenehme Konsistenz der gefrorenen Eismasse sorgt. Da sich insbesondere im Temperaturbereich zwischen 0 °C und ca. -8 °C bis -10 °C große Eiskristalle bilden, ist das rasche Durchlaufen gerade dieses Temperaturbereiches im Hinblick auf das Vermeiden großer Eiskristalle und damit im Hinblick auf die Qualität des Eises vorteilhaft. Mit Hilfe des erfindungsgemäßen Verfahrens lässt sich dieser Temperaturbereich aufgrund der sehr niedrigen Temperatur der Eisform sehr rasch durchlaufen. Im Vergleich zu den aus dem Stand der Technik bekannten industriellen Herstellungsverfahren für Eis am Stiel, in denen Eisformen mit einer darin befindlichen Eismasse in eine Kühlwanne mit einer Temperatur von -30 °C bis -40 °C gegeben werden, wird der Temperaturbereich zwischen 0 °C und ca. -8 °C bis -10 °C in einem Drittel der bisher üblichen Zeit durchlaufen. Dies macht es möglich, die Eiskristallbildung während des Gefrierprozesses nahezu auszuschließen. So kann gleichwohl eine homogene, cremige gefrorene Eismasse entstehen, ohne dass es hierzu der Zusätze von Fett und/oder Zucker und/oder Luft zu bedarf, was die Spielräume für die Rezeptur von Speiseeis erheblich erweitert. Insbesondere lässt sich mit dem erfindungsgemäßen Verfahren auch alkoholhaltiges Speiseeis herstellen, da aufgrund der raschen Abkühlung der Eismasse in der sehr kalten Eisform auf Temperaturen unter - 60 °C der in der Eismasse enthaltende Alkohol im Wesentlichen zum gleichen Zeitpunkt gefriert wie das in der Eismasse enthaltene Wasser, d.h. unterhalb von -60 °C zu einer molekularen Emulsion von Wasser und Alkohol führt. Es kann daher ein homogenes, alkoholhaltiges Eis, insbesondere ein alkoholhaltiges Eis am Stiel, hergestellt werden.

Die Eismasse weist beim Einfüllen in die abgekühlte Eisform typischerweise eine Temperatur im Bereich von 3 °C bis 10 °C, vorzugsweise im Bereich von 4 °C bis 6 °C auf. Es ist vorteilhaft, wenn die Eismasse durch die Eisform beim Gefrieren auf wenigstens -20 °C, vorzugsweise auf wenigstens -30 °C abgekühlt wird, da dadurch eine hinreichende Lager- und Transportfähigkeit des fertigen Eises erzielt wird. Im erfindungsgemäßen Verfahren wird daher vorzugsweise eine Eisform mit einer Wärmekapazität verwendet, die so bemessen ist, dass die von der beim Einfüllen wenigstens 4 °C warme Eismasse bis zum vollständigen Auskühlen der Eismasse auf wenigstens -20 °C, vorzugsweise auf wenigstens -30 °C, abgegebene Wärme vollständig von der abgekühlten Eisform aufgenommen wird. Die Wärmekapazität der Eisform kann dabei durch das Material und die Wandstärke der Eisform bestimmt werden. Typische Materialien sind lebensmittelechte Metalllegierungen, beispielsweise Legierungen auf Aluminiumbasis oder rostfreie Stähle. Die zum Gefrieren der Eismasse auf mindestens -20 °C, insbesondere auf mindestens -30 °C benötigte Wärmekapazität bestimmt sich dabei aus der Masse und der spezifischen Wärmekapazität der Eisform sowie aus dem formgebenden Volumen der Eisform, die die Menge an zu gefrierende Eismasse bestimmt. Um ein rasches Aufnehmen der Wärme der zu gefrierenden Eismasse durch die Eisform zu ermöglichen, ist es vorteilhaft, wenn die Eisform eine hohe Wärmeleitfähigkeit aufweist. Dies ist typischerweise bei metallischen Eisformen der Fall. Besonders geeignet sind hierbei Aluminiumlegierungen, da Aluminium eine relativ hohe Wärmeleitfähigkeit besitzt.

Um das Entfernen der gefrorenen Eismasse aus der Form zu ermöglichen, ist es vorteilhaft, wenn die Eisform nach dem Gefrieren der Eismasse für einen Zeitraum von 1 bis 10 sec, vorzugsweise für einen Zeitraum von 2 bis 4 sec, in ein warmes Wasserbad getaucht wird. Das Wasserbad kann dabei eine Temperatur im Bereich von 10 °C bis 20 °C, insbesondere im Bereich von 10 °C bis 15 °C aufweisen.

Im Rahmen des erfindungsgemäßen Verfahrens kann insbesondere eine Eismasse Verwendung finden, die kein Fett und/oder keinen Zucker und/oder keine Luft enthält. Dadurch, dass auf diese in der Eisherstellung üblichen Zutaten verzichtet werden kann, ergeben sich eine Vielzahl neuer Rezepturen für Speiseeis, insbesondere Kalorien und fettarme Rezepturen.

Wie bereits erwähnt, können im Rahmen des erfindungsgemäßen Verfahrens auch alkoholhaltige Eismassen zur Herstellung des Speiseeises Verwendung finden.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein Ablaufdiagramm für ein Ausführungsbeispiel des erfindungsgemäßen Verfahrens zur Speiseeisherstellung.
- Figur 2: zeigt stark schematisiert einen ersten Schritt des erfindungsgemäßen Verfahrens.
- Figur 3: zeigt stark schematisiert einen zweiten Schritt des erfindungsgemäßen Verfahrens.
- Figur 4: zeigt stark schematisiert einen dritten Schritt des erfindungsgemäßen Verfahrens.
- Figur 5: zeigt stark schematisiert einen vierten Schritt des erfindungsgemäßen Verfahrens.

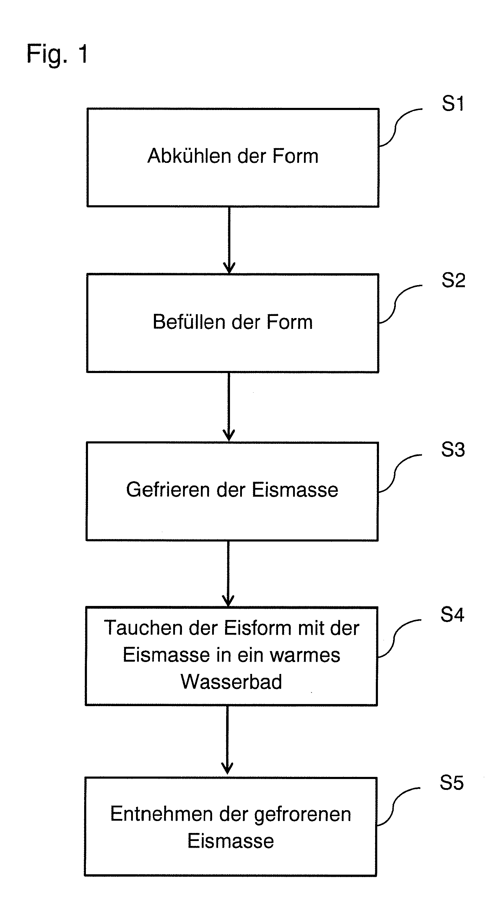

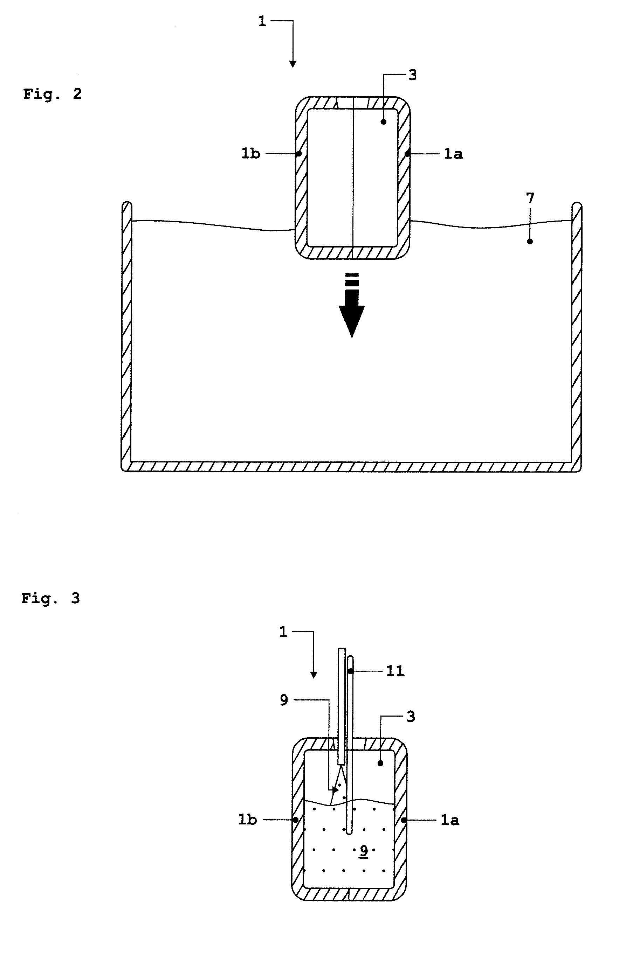

Ein Ausführungsbeispiel für das erfindungsgemäße Verfahren wird nachfolgend mit Bezug auf die Figuren 1 bis 5 beschrieben. Während Figur 1 den Ablauf des Verfahrens anhand eines Ablaufdiagrammes verdeutlicht, zeigen die Figuren 2 bis 5 in einer schematischen Darstellung verschiedene Verfahrensschritte des erfindungsgemäßen Verfahrens.

Das erfindungsgemäße Verfahren wird mit einer Eisform 1 durchgeführt, die in den Figuren 2 bis 5 in einer geschnittenen Darstellung gezeigt ist. Die Eisform 1 besteht aus zwei Hälften 1 a und 1 b, die zusammen einen die inverse Form des herzustellenden Eiskörpers aufweisenden Hohlraum 3 bilden. Die beiden Hälften 1a und 1 b der Form 1 weisen jeweils Kontaktflächen 5a, 5b auf, an denen sie einander kontaktieren, wenn die beiden Hälften 1a, 1 b zu der Eisform 1 zusammengesetzt sind. Zum Entnehmen des Eises können die beiden Hälften 1a, 1b entlang der Kontaktflächen 5a, 5b voneinander getrennt werden.

Die Eisform 1 besteht im vorliegenden Ausführungsbeispiel aus einer lebensmitteltauglichen Legierung, die beispielsweise eine Metalllegierung auf Aluminiumbasis oder rostfreier Stahl sein kann.

Eine typische Eisform kann bspw. drei Hohlräume zu je 15 ml aufweisen und eine Wandstärke von etwa 4 mm haben. Je nach spezifischer Wärmekapazität des Materials, aus dem die Eisform 1 hergestellt ist, kann die Wandstärke jedoch auch geringer oder größer als 4 mm betragen. Typische Wandstärken liegen im Bereich von 2 mm bis 10 mm.

Der Ablauf eines Ausführungsbeispiels für das erfindungsgemäße Verfahren zum Herstellen von Eis am Stiel wird nachfolgend mit Bezug auf Figur 1 beschrieben, wobei bei einigen Verfahrensschritten auf die Figuren 2 bis 5 Bezug genommen wird.

In einem ersten Schritt S1 des Ausführungsbeispiels für das erfindungsgemäße Verfahren wird die bereits zusammengesetzte Form 1 in flüssigen Stickstoff getaucht, so dass sie auf -196 °C abkühlt, wie dies schematisch in Figur 2 dargestellt ist. Obwohl die Eisform 1 im vorliegenden Ausführungsbeispiel bereits vor dem Eintauchen in den flüssigen Stickstoff zusammengesetzt worden ist, besteht grundsätzlich auch die Möglichkeit, die beiden Hälften 1 a, 1b getrennt im flüssigen Stickstoff abzukühlen und erst im abgekühlten Zustand zusammenzusetzen. Da die Handhabung der beiden Hälften 1 a, 1b im noch nicht abgekühlten Zustand einfacher ist, wird im vorliegenden Ausführungsbeispiel jedoch davon abgesehen, die Eisform in voneinander getrennten Hälften 1a, 1 b abzukühlen. Nach dem Abkühlen der Eisform 1 wird diese aus dem flüssigen Stickstoff entfernt.

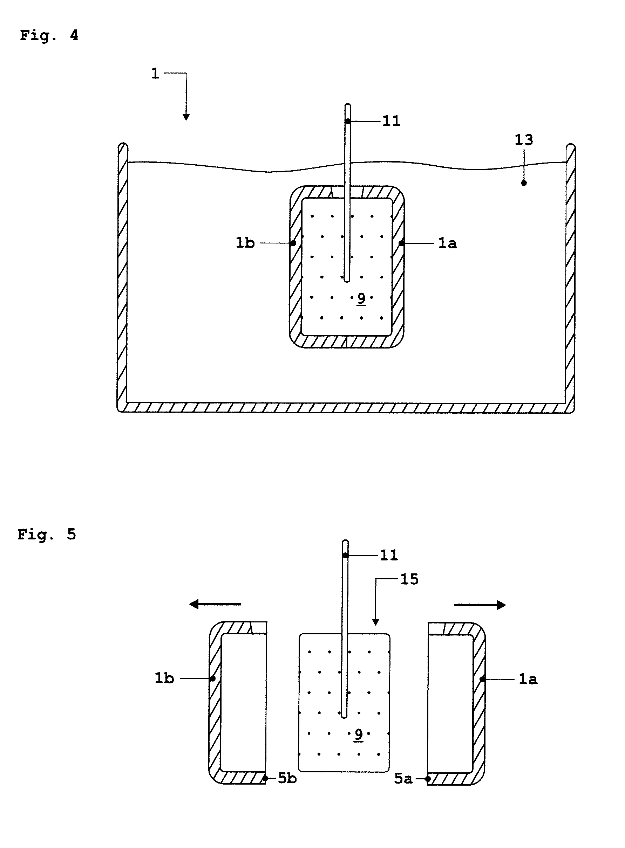

In Schritt S2 wird die auf -196 °C abgekühlte Eisform mit einer Eismasse 9 befüllt (Figur 3). Außerdem wird ein Stiel 11 in die Eismasse 9 eingeführt. Die Eismasse 9 weist beim Einfüllen in den Hohlraum 3 der Eisform 1 eine Temperatur im Bereich von 4 °C bis 6 °C auf und wird durch die sehr kalte Eisform sehr rasch auf ca. -70 °C abgekühlt. Dabei durchläuft die abkühlende Eismasse 9 insbesondere sehr rasch den Temperaturbereich zwischen 0 °C und -8 °C bis -10 °C, wodurch sich die Eismasse nur in einem sehr geringen Zeitraum in diesem Temperaturbereich befindet. Aufgrund des geringen Zeitraums im Temperaturbereich zwischen 0 °C und -8 °C bis -10 °C können sich keine großen Eiskristalle bilden. Bei Temperaturen unterhalb von ca. -8 °C bis -10 °C findet keine Bildung großer Eiskristalle mehr statt. Indem diese Temperaturspanne so schnell durchlaufen wird, kann sich Wasser in der Zelle nicht, jedenfalls nicht nennenswert, ausdehnen, so dass die gefrorene Eismasse auch besonders genau geformt werden kann Nachdem die Eismasse im Schritt S3 des vorliegenden Ausführungsbeispiels auf -70 °C gefroren worden ist, wird die mit der gefrorenen Eismasse 9 gefüllte Eisform 1 in Schritt S4 für ca. 3 bis 5 Sekunden in ein Wasserbad 13 mit ca. 15 °C bis 20 °C eingetaucht, um eine Entnahme des fertigen Eises aus der Eisform 1 zu ermöglichen. Obwohl im vorliegenden Ausführungsbeispiel das Wasser des Wasserbades ca. 15 °C bis 20 °C aufweist, sind andere Temperaturen des Wasserbades möglich. Diese können insbesondere im Bereich zwischen 10 °C und 25 °C liegen. Die Dauer, für die die Eisform 1 mit der gefrorenen Eismasse 9 in das Wasserbad eingetaucht wird, hängt dabei von der Temperatur des Wasserbades ab. Je wärmer das Wasserbad ist, desto kürzer ist das Eintauchen der Eisform 1 mit der gefrorenen Eismasse 9. Der Eintauchprozess in das Wasserbad ist schematisch in Figur 4 dargestellt.

Nachdem die Eisform mit der darin befindlichen gefrorenen Eismasse 9 aus dem Wasserbad 13 entfernt worden ist, werden die beiden Hälften 1 a, 1 b der Eisform 1 voneinander getrennt, und das fertige Eis am Stiel 15 wird der Eisform entnommen. Dies ist schematisch in Figur 5 dargestellt. Das der Eisform 1 entnommene Eis am Stiel 15 wird dann verpackt und zur weiteren Verwendung gelagert oder an einen Abnehmer geliefert.

Das beschriebene Verfahren zum Herstellen von Speiseeis wurde anhand eines Ausführungsbeispiels für die Herstellung von Eis am Stiel beschrieben. Es kann aber auch zur Herstellung von anderen Eisarten Verwendung finden. Außerdem ermöglicht es das erfindungsgemäße Verfahren aufgrund des raschen Durchlaufens des Temperaturbereiches zwischen 0 °C und -8 °C bis -10 °C, Eismassen ohne Fett und/oder Zucker und/oder Luft zu verwenden. Ebenso ist die Verwendung von alkoholhaltigen Eismassen zum Herstellen des Speiseeises möglich. Das erfindungsgemäße Verfahren ermöglicht daher die Verwendung einer sehr großen Bandbreite an Rezepturen für die Herstellung von Speiseeis.

Da bei dem erfindungsgemäßen Verfahren lediglich die Form abgekühlt werden muss und dieses Abkühlen mit Hilfe des flüssigen Stickstoffs sehr rasch erfolgt, lässt sich die für die Herstellung von Speiseeis benötigte Zeitdauer gegenüber dem Abkühlen der Form zusammen mit den darin befindlichen Speiseeis deutlich verringern. Zudem wird auch die für das Entnehmen des Speiseeises aus der Form benötigte Zeitdauer verringert, da die Form durch die Aufnahme der Wärme der eingefüllten Eismasse vor dem Eintauchen in das Wasserbad bereits eine Temperatur über -196 °C angenommen hat, wenn sie in das Wasserbad eingetaucht wird. Wenn dagegen die Form zusammen mit der Eismasse zum Gefrieren der Eismasse wie in US 2014/0072681 A1 in flüssigen Stickstoff getaucht wird, weist sie nach der Entnahme aus dem flüssigen Stickstoff eine sehr viel niedrigere Temperatur als bei dem erfindungsgemäßen Verfahren auf, so dass sie länger im Wasserbad verbleiben muss. Außerdem stellt das erfindungsgemäße Verfahren ein selbstregulierendes System hinsichtlich der Temperatur der gefrorenen Eismasse dar. Die Temperatur der gefrorenen Eismasse liegt im beschriebenen Ausführungsbeispiel bei jedem Eiscremekörper bei -70°C, ohne dass hierfür eine aufwendige Steuerung notwendig wäre. Wenn dagegen die Eismasse bereits vor dem Eintauchen der Eisform in den flüssigen Stickstoff in die Eisform eingefüllt wäre, wäre zum Erreichen einer Temperatur der Eismasse oberhalb -196°C eine aufwendige Zeitsteuerung notwendig, die die für das Erreichen einer bestimmten Temperatur notwendige Zeitspanne, über die die befüllte Eisform in den flüssigen Stickstoff eingetaucht werden muss, berechnet und das Verfahren entsprechend steuert. Die vorliegende Erfindung ermöglicht daher ein einfaches industriell anwendbares Verfahren zum Herstellen von Speiseeis, welches die Eisherstellung beschleunigt und die Herstellung von kalorien- und/oder fettarmem Speiseeis ebenso ermöglicht, wie die Herstellung von alkoholhaltigem Speiseeis.

Die vorliegende Erfindung wurde zu Erläuterungszwecken anhand eines Ausführungsbeispiels detailliert erläutert. Wie aus der Beschreibung des Ausführungsbeispiels bereits ersichtlich ist, können einzelne Merkmale des Ausführungsbeispiels abgewandelt werden, ohne vom erfindungsgemäßen Verfahren abzuweichen. Die Erfindung soll daher nicht auf eine Merkmalskombination des Ausführungsbeispiels beschränkt sein, sondern lediglich durch die beigefügten Ansprüche.

### Bezugszeichenliste

- 1: Eisform
- 1a, 1b: Hälften
- 3: Hohlraum
- 5a, 5b: Kontaktflächen
- 7: flüssiger Stickstoff
- 9: Eismasse
- 11: Stiel
- 13: Wasserbad
- 15: Eis am Stiel

## Patentansprüche

1. Verfahren zur Herstellung von Speiseeis, in dem eine Eisform (1) mit einer Eismasse (9) befüllt (S2) und die Eismasse (9) in der Eismorm (1) zum Speiseeis gefroren wird (S3), **dadurch gekennzeichnet, dass** die Eisform (1) vor dem Befüllen (S2) mit der Eismasse (9) auf eine Temperatur von unter -150 °C abgekühlt wird (S1) und das Gefrieren (S3) der Eismasse (9) durch Abgeben der in der Eismasse (9) enthaltenen Wärme an die abgekühlte Eisform (1) erfolgt.

2. Verfahren nach Anspruch 1, **dadurch gekennzeichnet, dass** die Eisform (1) durch Eintauchen in ein Bad aus flüssigem Stickstoff (7) auf die Temperatur von unter -150 °C abgekühlt wird (S1).

3. Verfahren nach Anspruch 2, in dem die Eisform (1) auf die Temperatur des Flüssigen Stickstoffs (7) abgekühlt wird (S1).

4. Verfahren nach einem der Ansprüche 1 bis 3, **dadurch gekennzeichnet, dass** die Eismasse (9) beim Einfüllen (S2) in die abgekühlte Eisform (1) eine Temperatur im Bereich von 3 °C bis 10 °C aufweist.

5. Verfahren nach einem der Ansprüche 1 bis 4, **dadurch gekennzeichnet, dass** die Eismasse (9) durch die Eisform (1) beim Gefrieren (S3) auf wenigstens -20 °C abgekühlt wird.

6. Verfahren nach Anspruch 4 und Anspruch 5, **dadurch gekennzeichnet, dass** die Eisform (1) eine Wärmekapazität besitzt, die so bemessen ist, dass die von der wenigstens 4 °C warmen Eismasse (9) bis zum vollständigen Auskühlen der Eismasse (9) auf wenigstens -20 °C abgegebene Wärme vollständig von der abgekühlten Eisform (1) aufgenommen wird.

7. Verfahren nach einem der Ansprüche 1 bis 6, **dadurch gekennzeichnet, dass** die Eisform (1) aus einer lebensmittelechten Metalllegierung hergestellt ist.

8. Verfahren nach einem der Ansprüche 1 bis 7, **dadurch gekennzeichnet, dass dadurch gekennzeichnet, dass** die Eisform (1) nach dem Gefrieren (S3) der Eismasse (9) für einen Zeitraum von 1 bis 10 Sekunden in ein warmes Wasserbad (13) getaucht wird (S4).

9. Verfahren nach Anspruch 8, **dadurch gekennzeichnet, dass** das warme Wasserbad eine Temperatur im Bereich zwischen 10 °C und 20 °C hat.

10. Verfahren nach einem der Ansprüche 1 bis 9, **dadurch gekennzeichnet, dass** eine Eismasse (9) Verwendung findet, die kein Fett und/oder keinen Zucker und/oder keine Luft enthält.

11. Verfahren nach einem der Ansprüche 1 bis 10, **dadurch gekennzeichnet, dass** eine Eismasse (9) Verwendung findet, die Alkohol enthält.
